# EUROPEAN PATENT SPECIFICATION

(11) **EP 1 197 673 B1**
(45) Date of publication and mention of the grant of the patent: **21.12.2005**
(21) Application number: 01203892.3
(22) Date of filing: 12.10.2001
(51) Int. Cl.: F16F 7/12

(54) **Improved efficiency impact absorption device**
Stossdämpfende Vorrichtung mit verbesserter Leistungsfähigkeit
Dispositif d'absorption de choc d'efficacité améliorée

(30) Priority: 18.10.2000 IT MI002251
(43) Date of publication of application: 17.04.2002
(73) Proprietor: Adlev S.r.l., 20052 Monza (Milan) (IT)
(72) Inventor: Vismara, Mario, 22064 Casatenovo (Lecco) (IT)
(74) Representative: De Gregori, Antonella

(56) References cited:
- EP-A- 0 705 994
- EP-A- 1 130 279
- WO-A-00/24613
- WO-A-01/59324
- DE-A- 4 425 830
- US-A- 4 029 350
- PATENT ABSTRACTS OF JAPAN vol. 1997, no. 11, 28 November 1997 (1997-11-28) & JP 09 196097 A (SHOWA AIRCRAFT IND CO LTD), 29 July 1997 (1997-07-29)
- PATENT ABSTRACTS OF JAPAN vol. 2000, no. 03, 30 March 2000 (2000-03-30) & JP 11 351306 A (TOYOBO CO LTD), 24 December 1999 (1999-12-24)

## Description

The present invention concerns an impact absorption device according to the preamble of claim 1. Such a device is known from US-A-4 029 350.

As is known, various impact absorption devices exist, in particular made of alveolar structures more commonly defined as "honeycomb".

Honeycombs are, in fact, special structures generally characterised by good impact absorption properties.

They are therefore used where it is necessary to reduce the effects of any impact on persons or means of locomotion (in particular motor vehicles).

Various types of honeycomb currently exist, firstly aluminium honeycombs.

They offer good performance in terms of impact absorption.

The production process of these honeycombs is basically the following: flat sheets of aluminium are reciprocally glued along pre-set lines: subsequently, the areas not glued are widened to form the cavities (that can have different shapes) of the honeycomb.

Another type of aluminium honeycomb is made by gluing pre-shaped aluminium sheets on flat aluminium plates. This type is characterised by thicker walls.

The main limit of aluminium honeycombs is their cost which can be very high.

A second type of known honeycomb is the extruded plastic type.

They consist basically of extruded plastic tubes, for example polycarbonate, subsequently glued or welded together to form the honeycomb. They have relatively thin walls: they work well for average specific compression (generally below 10 N/mm²): high energy impact therefore requires considerable expanses of this honeycomb.

The limits of these honeycombs are: very high cost and restricted fields of application (not all motor vehicles have sufficient space to accommodate the necessary expanse of these honeycombs).

A third type of known honeycomb is the plastic injection-moulded honeycomb.

They are produced with different materials: for example polypropylene, ABS, polycarbonate and polyethylene.

They are much cheaper than the other types but their performance is decidedly inferior.

To obtain injection-moulded honeycombs, the walls of said honeycombs must have minimum thickness of 1 ö 1.5 mm.

Therefore, during flexional deformation resulting from the action of impact, the walls undergo considerable elongation.

Furthermore, the above-mentioned plastics have modest ultimate elongation.

In the event of a impact, therefore, the walls of injection-moulded honeycombs tend to collapse very rapidly, with consequent poor impact absorption ability.

A further observation concerning the known technique which applies to all the types of honeycomb described above is that they can be tapered at one of the longitudinal ends in order to reduce the energy peak absorbed: in general, the narrower the taper, the lower the peak value of the energy absorbed.

The main aim of the present invention is to produce an improved efficiency impact absorption device that offers superior performance with respect to the known technique.

A further aim of the present invention is to produce an improved efficiency impact absorption device that is lighter and cheaper than aluminium honeycombs.

A further aim of the present invention is to produce an improved efficiency impact absorption device that is cheaper than extruded plastic honeycombs.

These and other aims are achieved by an impact absorption device according to the characterising part of claim 1, which is here referred to for the sake of brevity.

Further characteristics of the present invention are defined in the other claims.

Further aims and advantages of the present invention will become clear from the following description and attached drawings, provided as a non-restrictive example, in which:
- figure 1 shows an axonometric view of an improved efficiency impact absorption device, according to a first embodiment of the present invention, in a configuration prior to impact;
- figure 2 shows an axonometric view of the impact absorption device of figure 1, in a configuration after impact;
- figure 3 shows a longitudinal section of the impact absorption device of figures 1-2, in a configuration after impact;
- figure 4 shows an axonometric view of an improved efficiency impact absorption device belonging to a second embodiment of the present invention, in a configuration prior to impact;
- figure 5 shows an axonometric view of the impact absorption device of figure 4, in a configuration after impact;
- figure 6 shows a graph representing an energy absorption curve of a first known absorber;
- figure 7 shows a graph representing two energy absorption curves relating to two known absorbers, with and without taper; and
- figure 8 shows a graph representing three energy absorption curves, two of which relate to known absorbers, with and without taper, and the third relating to the device of the invention.

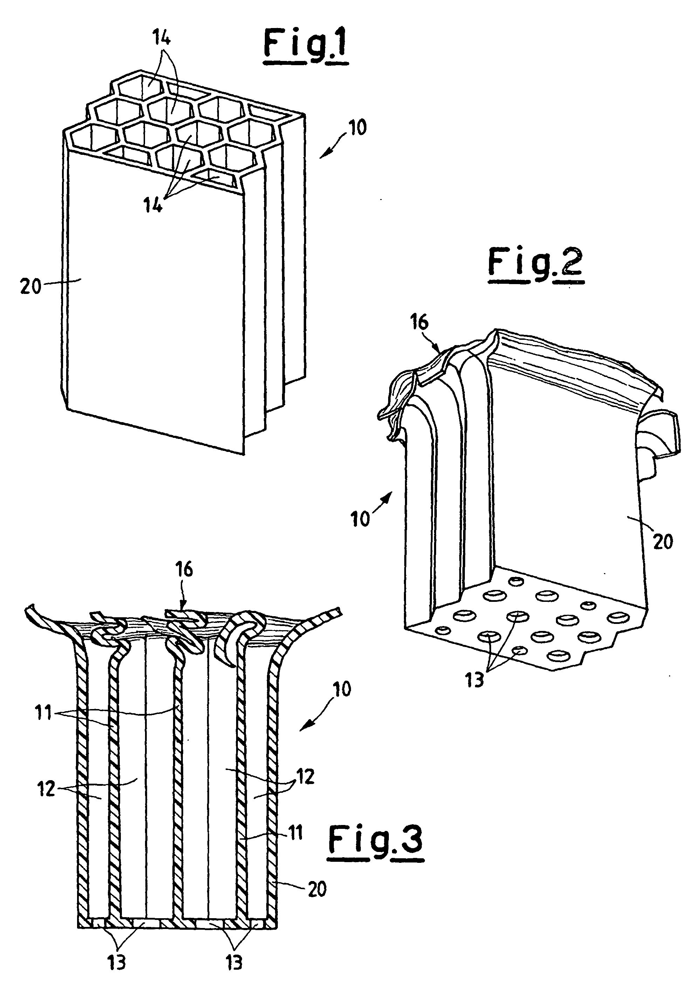

With particular reference to figures 1-3, the improved efficiency impact absorption device, according to a first embodiment of the present invention, is indicated overall by reference number 10.

The device of the invention consists basically of a plastic injection-moulded honeycomb, or alveolar structure.

Said honeycomb structure is indicated overall by reference number 20 in figures 1-5.

The honeycomb 20 features a number of ribs 11 that define respective channels 12, with basically hexagonal section, terminating in holes 13, in the lower part of the honeycomb 20.

In figure 1, the hexagonal apertures 14 that define the hexagonal channels 12 are visible in the upper part of the honeycomb 20.

In particular, the plastic used in the device of the present invention is a plastic resin derived from polycarbonate (trademark registered by General Electric: Xenon®).

This material is characterised by a high ultimate elongation value; in addition, it maintains its mechanical characteristics basically stable in the -40°C / +80°C temperature range.

This material is furthermore stable over a wide temperature range; it behaves well from the point of view of resilience, it is not fragile and does not tend to collapse or explode as a result of impact.

The high ultimate elongation value of this material permits the production of injection-moulded honeycombs that can work more efficiently than the known injection-moulded honeycombs: in fact, during impact, the internal walls of honeycombs moulded with Xenon® do not collapse and they therefore perform efficiently in absorbing the impact energy, transforming it into deformation energy.

On the other hand, it should be remembered that the outer walls of these honeycombs undergo a very high level of deformation, indicated by reference number 16, breaking very soon.

It follows that honeycombs produced in this way perform more efficiently than the known injection-moulded honeycombs but not to their full potential.

Another suitable material that can be used in the device of the invention, as an alternative to Xenoy®, is rubber-filled polypropylene.

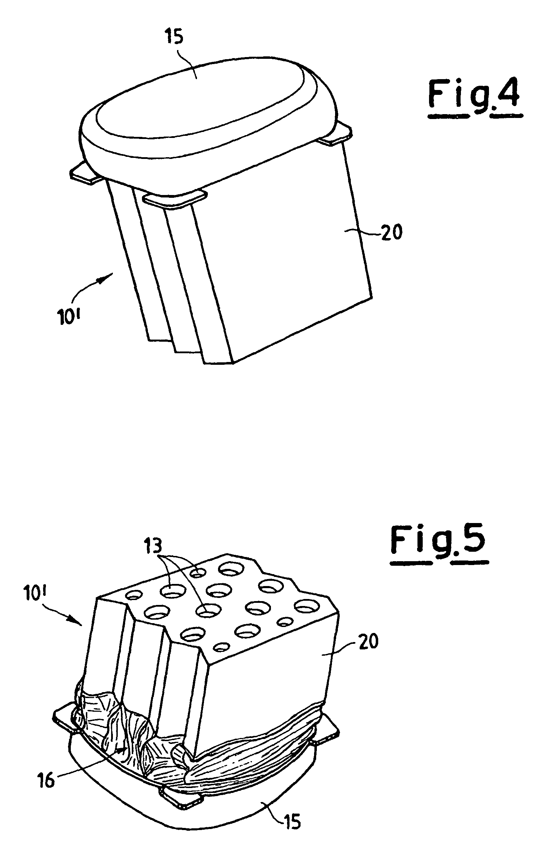

The embodiment visible in figures 4-5, and indicated overall by reference number 10', features a deformation containment element 15, preferably made of high resistance material, for example steel.

This increases the efficiency of the honeycombs 20.

These containment elements 15 must be sized in order to withstand the considerable stress due both to the impact and consequent lateral thrust of the injection-moulded honeycombs (the outer walls of the honeycombs 20 tend to deform laterally when compressed).

Thanks to the effect of the containment elements 15, the lateral walls of the honeycombs 20 also work efficiently: in fact, deformation exceeding the breaking limits of the material is prevented also at the walls themselves, which contribute to increasing the effectiveness of the impact absorption (as they do not collapse, they continue to absorb impact energy, transforming it into deformation energy).

The containment elements 15 can be made of high resistance material, for example steel.

The effect of these elements 15 on the overall weight of the device is modest as their volume is well below the overall volume: even if materials with a high specific weight are used (such as steel), the overall weight of the device 10' is in any case less than similar products in aluminium.

The containment elements 15 do not necessarily have to be made integral (glued, welded) with the honeycombs; furthermore said elements can be obtained directly on the vehicles.

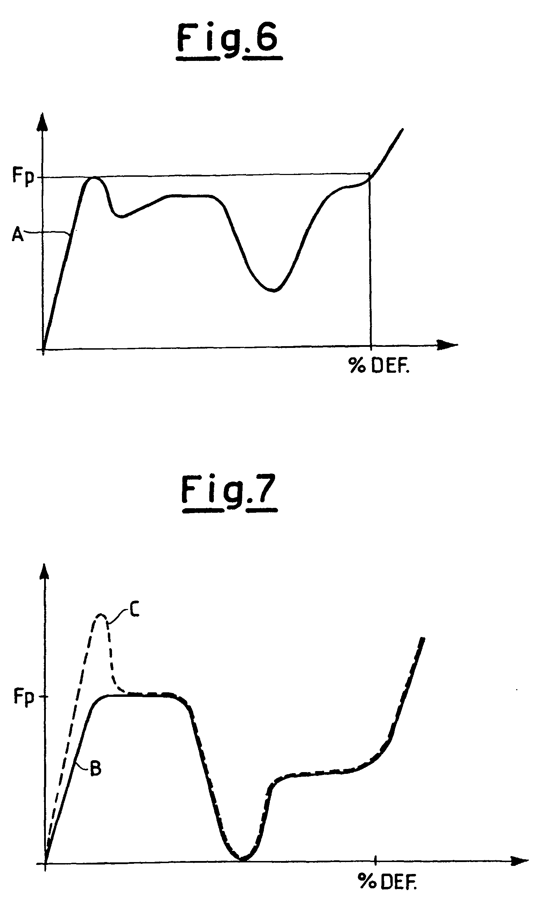

Proceeding now with a more detailed examination of the properties of the materials used as absorbers, figures 6-8 are examined in which Fp indicates the plateau level of the force and %DEF the deformation percentage of the absorber.

Figure 6 shows a graph representing an energy absorption curve of a first known absorber, where said curve is indicated by letter A.

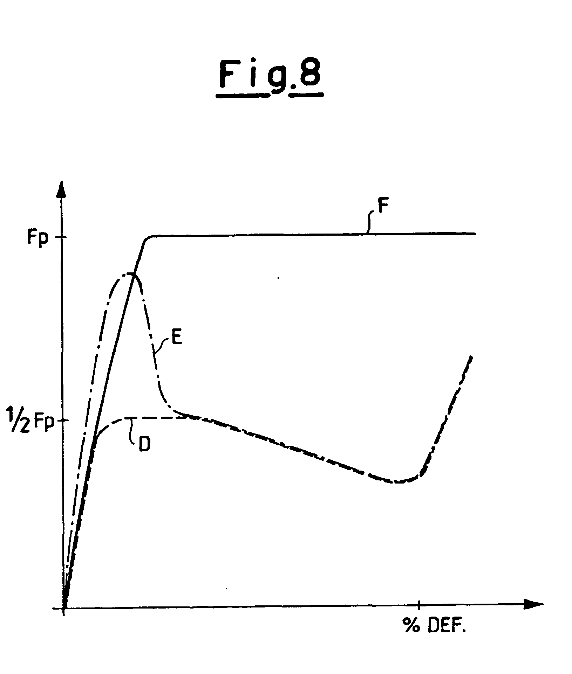

Figure 7, on the other hand, shows a graph representing two energy absorption curves relating to two known absorbers, with taper (curve B) and without taper (curve C); the presence of the taper prevents the absorption curve peak.

Furthermore, figure 8 shows a graph representing three energy absorption curves, two of which relate to known absorbers, with taper (curve D) and without taper (curve E).

Curve F, on the other hand, relates to the device of the invention; said curve shows the constant behaviour of the absorber of the invention in relation to different crushing percentages.

The honeycomb structures like those described in the context of the present invention have a taper on at least one of their longitudinal ends.

From the description provided, the characteristics of the improved efficiency impact absorption device are clear as are the advantages and operation thereof.

The following considerations and concluding comments are designed to define more accurately and clearly the above advantages with respect to the known products.

Firstly, compared to aluminium honeycombs, the devices of the invention offer the same level of performance but are much cheaper and lighter.

Compared to extruded plastic honeycombs, the devices of the invention offer the same level of performance but are much cheaper and more compact.

Compared to injection-moulded plastic honeycombs, the devices of the invention offer a much higher level of performance. The context of the invention is defined in the claims attached to this application.

## Claims

1. Impact absorption device (10, 10'), of the type comprising a honeycomb (20), where the above-mentioned honeycomb (20) features a number of ribs (11) that define respective channels (12), having a preferably hexagonal section, terminating in holes (13), at one end of the honeycomb (20), the above-mentioned honeycomb (20) being injection-moulded in plastic and the above-mentioned honeycomb featuring a taper at at least one of its longitudinal ends **characterised in that** the honeycomb is combined with a deformation containment element wrapped around the above-mentioned tapered end and the above-mentioned plastic is a plastic resin derived from polycarbonate or rubber-filled polypropylene.

2. Device (10, 10'), as in claim 1, **characterised in that** the above-mentioned containment element is made of high resistance material, preferably steel.

## Patentansprüche

1. Stoßdämpfende Vorrichtung (10, 10') von der Art umfassend eine Wabenstruktur (20), wobei die oben genannte Wabenstruktur (20) eine Anzahl von Lamellen aufweist, welche einzelne Kanäle (12) definieren, welche vorzugsweise einen hexagonalen Querschnitt aufweisen, welche in Öffnungen (13) an einem Ende der Wabenstruktur (20) enden, wobei die oben genannte Wabenstruktur (20) aus einem Kunststoff durch Spritzgießen hergestellt ist und wobei die oben genannte Wabenstruktur eine Verjüngung an mindestens einem ihrer longitudinalen Enden aufweist, **dadurch gekennzeichnet, dass** die Wabenstruktur mit einem Deformationseindämmungselement kombiniert ist, welches um das oben genannte verjüngte Ende gehüllt ist, und dass der oben genannte Kunststoff ein Kunstharz ist, welches aus Polycarbonat oder gummigefülltem Polypropylen gewonnen ist.

2. Vorrichtung (10, 10') nach Anspruch 1, **dadurch gekennzeichnet, dass** das oben genannte Eindämmungselement aus einem hoch widerstandsfähigen Material, vorzugsweise Stahl, hergestellt ist.

## Revendications

1. Dispositif d'absorption de choc (10, 10') du type comportant une structure en nid d'abeilles (20), dans lequel le nid d'abeilles mentionné ci-dessus (20) se **caractérise par** un certain nombre de nervures (11) qui définissent des canaux respectifs (12), présentant une section, de préférence, hexagonale, se terminant par des trous (13), au niveau d'une extrémité du nid d'abeilles (20), le nid d'abeilles mentionné ci-dessus (20) étant en plastique moulé par injection et le nid d'abeilles mentionné ci-dessus **se caractérisant par** une forme conique au niveau d'au moins l'une de ses extrémités longitudinales, **caractérisé en ce que** le nid d'abeilles est combiné avec un élément de confinement de déformation enroulé autour de l'extrémité de forme conique mentionnée ci-dessus et **en ce que** le plastique mentionné ci-dessus est une résine de plastique dérivée de polycarbonate ou de polypropylène à charge de caoutchouc.

2. Dispositif (10, 10') selon la revendication 1, **caractérisé en ce que** l'élément de confinement mentionné ci-dessus est constitué d'un matériau à résistance élevée, de préférence de l'acier.
